## Europäisches Patentamt

(19) **European Patent Office**

**Office européen des brevets**

(11) Publication number: **0 204 865**
**A1**

(12) # EUROPEAN PATENT APPLICATION

(21) Application number: **85113181.3**

(22) Date of filing: **17.10.85**

(51) Int. Cl.⁴: **B 60 T 8/36**

(30) Priority: **19.03.85 IT 1996985**

(43) Date of publication of application:
**17.12.86 Bulletin 86/51**

(84) Designated Contracting States:
**AT BE CH DE FR GB LI LU NL SE**

(71) Applicant: **FABBRICA ITALIANA MAGNETI MARELLI S.p.A.**
**Piazza S.Ambrogio 6**
**Milan(IT)**

(72) Inventor: **Maggioni, Virginio**
**Ponte S. Pietro**
**Bergamo(IT)**

(72) Inventor: **Riva, Corrado**
**Bovisio Masciago**
**Milan(IT)**

(74) Representative: **Jacobacci, Guido et al,**
**Jacobacci-Casetta & Perani S.n.c. Via Alfieri 17**
**I-10121 Torino(IT)**

(54) **Electropneumatic control unit for antiskid braking in motor vehicles.**

(57) The unit consists of two single electropneumatic actuators (A1, A2), each comprising two shut-off valves, respectively to control the supply and discharge of a braking element, and two solenoid valves (E1, E2), governed by an electronic station apt to sense the dynamic behaviour of the wheel of the vehicle to be controlled.

The two actuators (A1, A2) are mechanically and pneumatically coupled on a respective surface (S1, S2) on the side opposite to that carrying the supply inlet (15, 15') and on which outlets an internal duct (18, 18') of each actuator, communicating with the respective supply inlet.

Pneumatic coupling is effected between the two internal ducts (18, 18') at the mating surfaces (S1, S2) and with the aid of a bush (22) inserted in flared holes (18a, 18'a) of the ducts outletting on the mating surfaces.

The supply to the unit takes place through the inlet (15) of an actuator (A1) and common internal duct (13, 18'); the supply inlet (15') of the other actuator (A2) being closed.

Application: The unit is used in pneumatic braking systems on commercial vehicles provided with antiskid systems of the wheels.

Advantages: a considerable reduction in the quantity of piping and fittings, with resulting substantial savings and simplification of the system.

./...

Croydon Printing Company Ltd.

EP 0 204 865 A1

Fig. 3

## DESCRIPTION OF THE INVENTION

This invention relates to an electropneumatic control unit for pneumatic braking on vehicles, specifically to a control unit for the supply and discharge of the braking elements of antiskid braking systems of industrial vehicles.

As it is known, in pneumatic braking systems for vehicles provided with antiskid systems, the supply and discharge of compressed air to/from the braking elements, in the braking phase, takes place by means of solenoid valves or single pneumatic actuators which control the above operations as a result of the control singnals received from an electronic station, apt to sense the dynamic behaviour of the wheels of the vehicle, by means of speed sensors.

The single actuators normally used each comprise two shut-off valves, respectively to control supply and discharge of a braking element and two solenoid control valves governed by the electronic station. Each actuator is fitted close to the braking element to be controlled, there fore close to a wheel. It follows that in order to provide the pneumatic connections between the distributor and the actuators, a plurality of pipes is necessary. Each wheel axle requires a duct between the distributor and an intermediate point on the axle, two intermediate ducts to connect

0204865

said point with the two lateral actuators and, lastly, two terminal ducts to connect the actuators with the braking elements.

In addition to the above ducts, several fittings or joints are necessary to connect the piping to the apparatus; for example a T connection fitted at an intermediate point of each axle is necessary to connect the duct from the distributor with the two lateral ducts.

The presence of several ducts and fittings obviously creates serious space problems in addition to handling difficulties. Due to the space occupied by the piping it is not always possible to fit the actuators in other suitable points in the system.

For example, it could be convenient to locate the actuators separately, or grouped in pairs, close to the electronic station, but this type of arrangement is almost impossible in present systems, due to the very mass of piping which is not compatible with the space available.

It is true that in order to limit these space problems groups of actuators have been proposed which comprise two single actuators in a single body. However, such assemblies do not allow simultaneous supply of a braking element of a wheel of an axle and the discharge of the braking element of the other wheel on the same axle.

This is a serious drawback in antiskid braking since it is not possible, with such units, to effect a different action, in the same instant, on the two wheels of a wheel axle. In practice, the braking does not take into account the different nature of the ground on which the two wheels of the axis rest.

Moreover, as the two actuators are constituted, as stated, of a common body or housing, they are not physi cally separable, hence it is not convenient, costwise, to utilize the group on systems requiring the installation of single actuators.

One purpose of the invention is to provide a twin set of electropneumatic actuators to control the supply and discharge of braking elements of pneumatic antiskid braking systems of vehicles, requiring a minimum number of piping and fittings and hence taking up an overall small space, so as to be apt to fit in any other suitable point of the system on vehicles.

A further object of the invention is to provide a twin actuator assembly with independent supply and discharge loops for each braking element i.e. for each wheel, and which is physically disassemblable into its two component units, making it possible to utilize both the twin assembly and the single compnent actuators, depending on requirements.

According to the teachings of this invention, the above objectives are achieved with a group of actuators char acterized by two single electropneumatic actuators, each comprising an independent supply and discharge loop with respective shut-off valves, each controlled by a solenoid valve governed from an electronic station, said actuators being mechanically and pneumatically coupled at a respective mating surface on the side opposite to the supply inlet side and on which outlets an internal duct of each actuator communicating with the supply inlet.

According to this invention the mechanical coupling of the actuators is achieved with the aid of securing means which engage the two actuators, while pneumatic coupling is effected between the two internal ducts on the coupling surfaces and with the aid of sealing means; the supply inlet of one actuator is closed so that the assembly is supplied through the free inlet of the other actuator and the common internal duct resulting from the pneumatic coupling of the single internal ducts.

Further characteristics and advantages of the group of actuators will be evident from the following description in conjunction with the annexed drawings which illustrate, by way of example, one preferred but not limitative form of

- 5 -

0204865

embodiment of the invention.

In the drawings :

- Figure 1 is a schematic view of an antiskid braking system for commercial vehicles provided with conventional type single actuators.

- Figure 2 is a schematic view of an antiskid braking system for commercial vehicles equipped with actuators according to the invention.

- Figure 3 is a longitudinal view in cross section of the group of electropneumatic actuators according to the invention.

Figure 4 is a schematic view of the pneumatic connections of the assembly of Figure 3.

- Figure 5 is a longitudinal view in cross section of a single actuator derived from the assembly of Figure 3.

- Figure 6 is a schematic view of the pneumatic connections of the actuator of Figure 5.

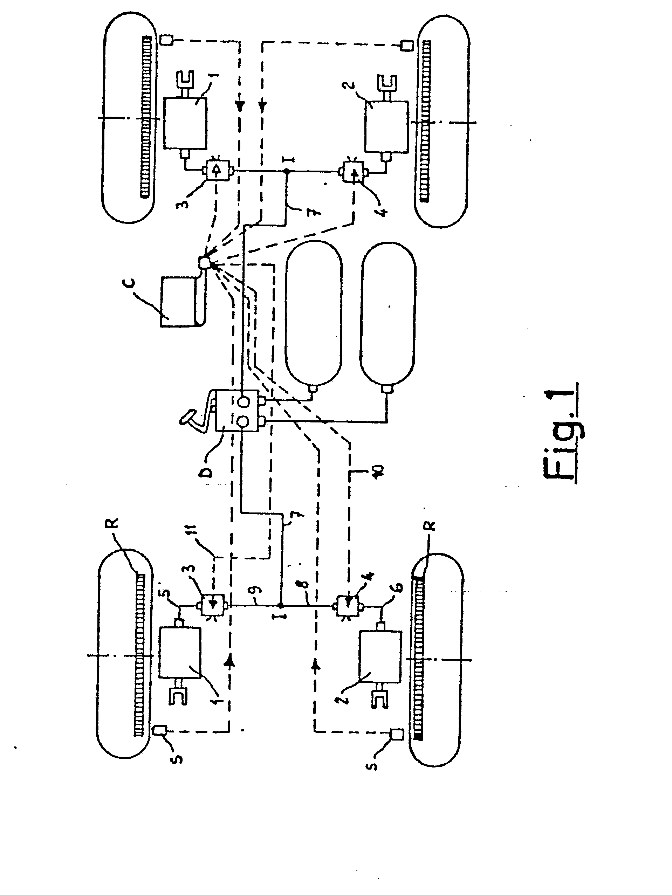

With reference to the system shown in Fig. 1, numbers 1,2 and 3,4 respectively identify the braking elements and actuators on an axle of the vehicle (what stated for one axle also applies to the other axle).

Each actuator 3,4 is connected to its respective braking element through a duct 5,6 and to pedal distributor D, through a common duct 7 and an intermediate duct 8,9. Moreover, each actuator is controlled, via a line 10,11 by electronic station C, which intervenes as a result of the signals received from speed sensors "S" fitted adjacent to phonic wheels "R".

When single actuators 3,4 are used, five ducts with seven fittings are required for each wheel axle; i.e. ten ducts with fourteen fittings for a two wheel axle vehicle.

The ducts are those identified by numbers 5,9,7 and 6,8 and the fittings are the inlet and outlet fittings of each actuator, the inlet actuator of the braking elements and the T fitting at point I which is the intermediate point on the wheel axle.

The invention consists in suitably coupling two single actuators in order to reduce the number of necessary ducts and fittings.

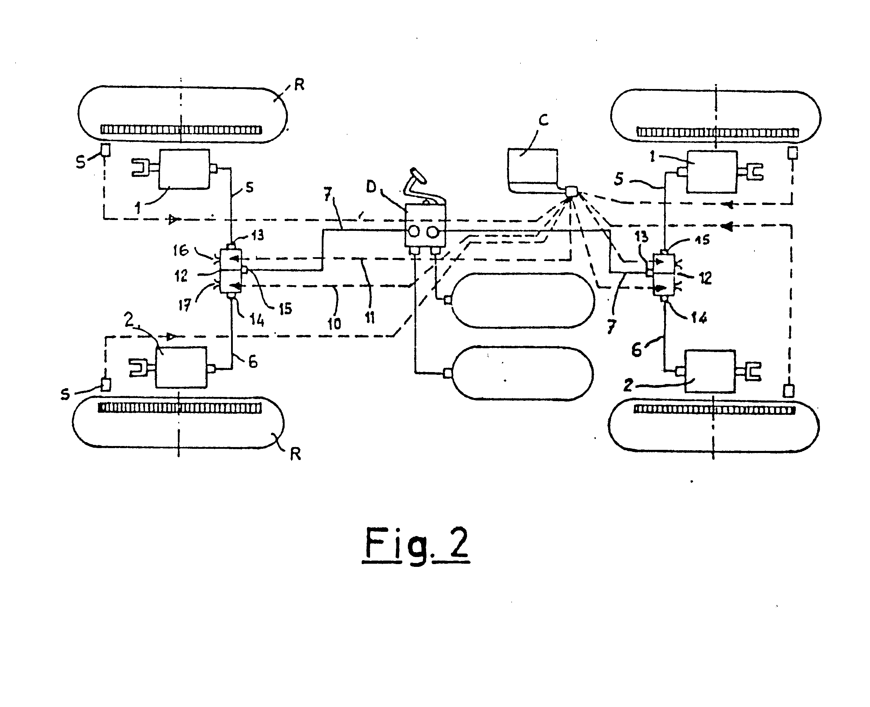

The invention is illustrated in Fig. 2 in which number 12 identifies the twin actuator assembly and the previous reference numbers relate to the other corresponding parts.

It is evident that in the above system, the ducts are limited to three, i.e. ducts 5,6 and 7 remain, while the fittings, on the other hand, are limited to five i.e. the two inlet fittings of the braking elements and three (13,14 and 15) of assembly 12.

**0204865**

A saving, therefore, is afforded, as compared to the conventional system of Fig. 1, having four ducts and four fittings for a two wheel axle vehicle. In particular, note the fact that the T fitting at intermediate point I is eliminated.

Yet the advantage, in addition to that of an economic nature, lies in the considerable reduction of the space occupied by the piping; this makes possible a simplification of the system of the vehicle and to fit the actuator assembly in other suitable positions of the system.

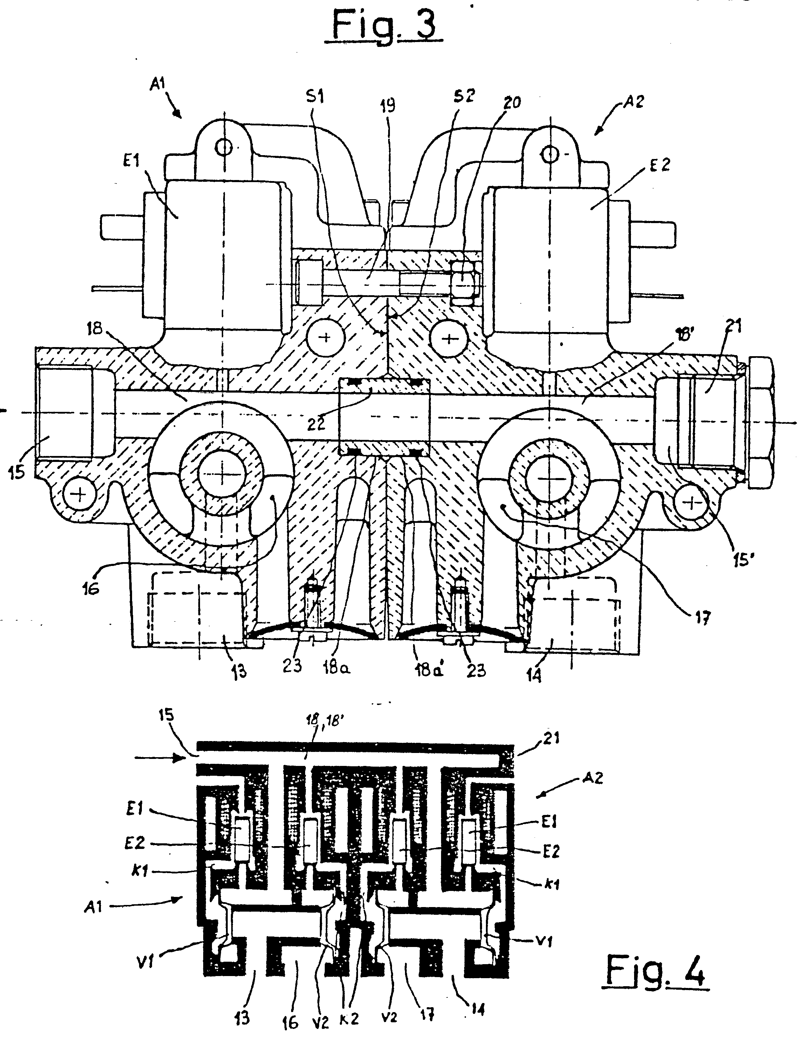

The structure and the pneumatic connections of actuator assembly 12 are illustrated in Figs. 3 and 4, in which A1 and A2 identify the two actuators (single), each comprising two shut-off valves V1,V2 apt, respectively, to control the supply and discharge of a braking element and two solenoid control valves E1 and E2 governed by electronic station C.

In fact, shut-off valves V1 and V2 are controlled by the pressure of a respective auxiliary loop K1, K2 governed by solenoid valves E1 or E2.

In the assembly numbers 15,15' identify the two supply inputs, numbers 13,14 the fittings connected to the two braking elements and numbers 16,17 the two discharge outlets.

According to the invention the two actuators A1, A2 are mechanically and pneumatically coupled on a surface S1,S2 on the side opposite to that having supply input 15,15' and on which outlets the internal duct 18, 18' of each actuator, communicating with respective supply inlet 15,15'.

Mechanical coupling is effected with the aid of preferably removable locking means, such as bolts 19 and nuts 20 engaging with the bodies of the two actuators.

Pneumatic coupling is effected between the two internal ducts 18,18' on the surfaces of coupling S1,S2 and with the aid of sealing means.

The supply inlet of one of the two actuators, for example inlet 15' of actuator A2, is closed by means of a sealing plug 21 and the feed is supplied through free inlet 15 of the other actuator A1 and internal duct 18,18' resulting from the coupling of single internal ducts 18 and 18'.

According to a first form of embodiment, the sealing means of the two internal ducts comprise a sleeve 22 the two ends of which are inserted in flared holes 18a and 18'a of internal ducts 18,18' which outlet on mating surfaces S1,S2 and two annular gaskets 23 housed in relevant grooves in sleeve 22.

According to another form of embodiment, these sealing means consist simply of circular gaskets (not shown), fitted between surfaces S1 and S2.

It can be seen in Figs. 3 and 4 that the twin actuator assembly, according to the invention, besides affording a saving in space keeps separate and independent, for each braking circuit, the supply loop controlled by V1 and the loading loop controlled by V2. It is therefore possible to brake and unbrake the wheel of an axle independently from the braking and unbraking of the other wheel on the same sxle.

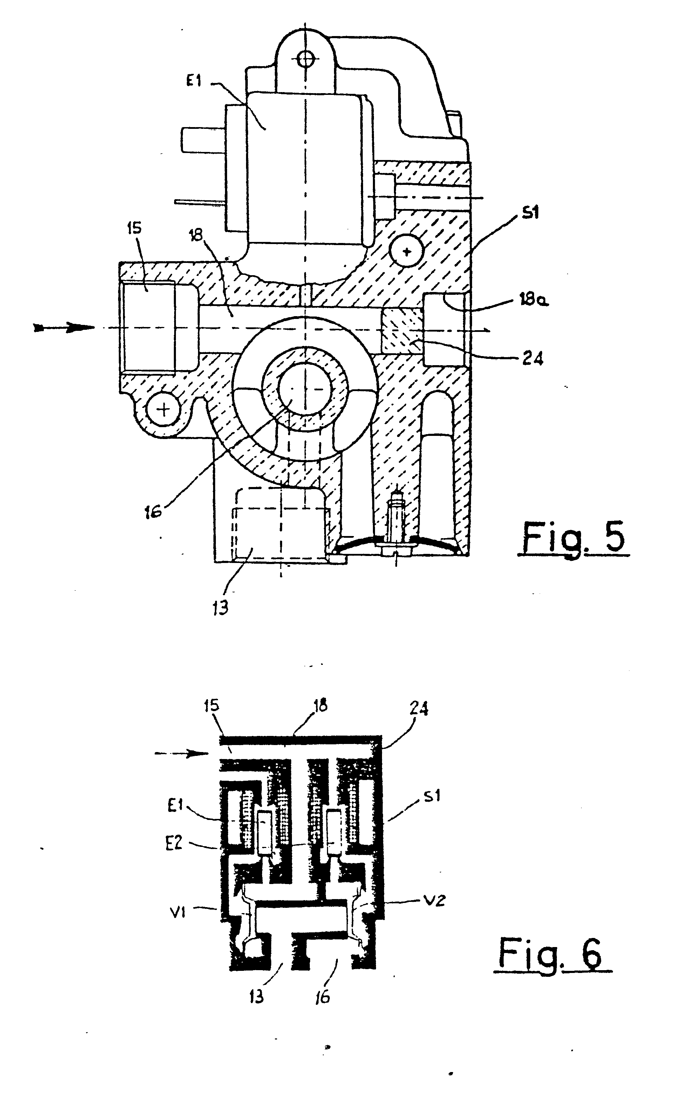

The simple actuator shown in Figs. 5,6 is derived from the twin asembly shown in Figs. 3,4; to utilize it as a single component, it is simply sufficient to close hole 18, on the side of coupling surface S1, with a sealing plug 24 or other means.

CLAIMS

1)      Electropneumatic actuator assembly apt to control the supply and discharge of pneumatic antiskid braking elements in vehicles, characterized in that it comprises two single electropneumatic actuators (A1,A2) of the type described, mechanically and pneumatically coupled on a respective surface (mating surface S1,S2) located on the side opposite to the supply inlet side (15,15' ) and on which outlets an internal duct (18,18') of each actuator communicating with the supply inlet, and that the mechanical coupling is effected with the aid of locking means which engage the two actuators, whilst pneumatic coupling is effected between the two internal ducts (18,18' ) at a point on the mating surfaces with the aid of sealing means, the supply inlet (15') of an actuator (A2) being closed (21) so that the assembly is supplied through the free inlet (15) of the other actuator (A1) and through the common internal duct (18,18') resulting from pneumatic coupling of the single internal ducts.

2)      Actuator assembly according to claim 1, characterized in that the locking  means for the actuators are removable and comprise screws (19) and bolts (20)  or similar means which engage the bodies of the two actuators.

3)     Actuator assembly according to claim 1, characterized in that the sealing means for internal ducts (18,18') comprise a bushing (or sleeve 22) the two ends of which are inserted, respectively, in flared holes (18,18'a), of the internal ducts outletting on mating surfaces (S1,S2) and in that on the outer surface of the bushing and/or inside said flared holes, annular grooves are provided to house relevant sealing gaskets (23).

4)     Actuator assembly according to claim 1 characterized in that the sealing means for internal ducts (18,18') comprise circular gaskets fitted between the mating surfaces of the actuators.

5)     Electropneumatic actuator to control the supply and discharge of braking elements in the pneumatic antiskid braking systems of vehicles, characterized by a mating surface (S1) on the side opposite to that of supply inlet (15) and by an internal duct (18) communicating with the supply inlet which :

a) outlets on mating surface (S1) if the actuator is designated to form the actuator assembly according to claim 1 or :

b ) it is closed (24) on the mating surface side if the actuator is destined to be utilized as a single unit.

Fig.1

0204865

Fig.2

7Y

0204865

Fig. 3

Fig. 4

0204865

Fig. 5

Fig. 6

European Patent Office

**EUROPEAN SEARCH REPORT**

0204865

Application number

EP 85 11 3181

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 116 500 (REXROTH) <br> * Whole document * | 1,2,4 | B 60 T 8/36 |
| Y | | 1-5 | |
| Y | DE-A-3 308 347 (BÖHNISCH) <br> * Whole document * | 1-5 | |
| X | FR-A-2 456 023 (QUINTON HAZELL) <br> * Figure 3 * | 1,3 | |
| A | DE-B-1 288 391 (DANFOSS) | | |

TECHNICAL FIELDS SEARCHED (Int. Cl 4)

B 60 T
F 16 K

The present search report has been drawn up for all claims

| Place of search | Date of completion of the search | Examiner |
|---|---|---|
| THE HAGUE | 20-06-1986 | BLURTON M.D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document